# EUROPÄISCHE PATENTSCHRIFT

(11) **EP 1 284 890 B1**
(45) Veröffentlichungstag und Bekanntmachung des Hinweises auf die Patenterteilung: **02.06.2004**
(21) Anmeldenummer: 01927622.9
(22) Anmeldetag: 28.03.2001
(51) Int. Cl.: B60R 21/01, G01D 5/353, G01L 1/24

(54) **INTRUSIONSSENSOR ZUR ERFASSUNG EINER UNFALLSCHWERE BEI EINEM FAHRZEUG**
VEHICLE INTRUSION DETECTOR FOR DETECTING THE SEVERITY OF AN ACCIDENT
DETECTEUR D'INTRUSION SERVANT A DETECTER LA GRAVITE D'UN ACCIDENT POUR UN VEHICULE

(30) Priorität: 13.05.2000 DE 10023588
(43) Veröffentlichungstag der Anmeldung: 26.02.2003
(73) Patentinhaber: ROBERT BOSCH GMBH, 70442 Stuttgart (DE)
(72) Erfinder: MORITZ, Rainer, 70794 Filderstadt (DE); STUETZLER, Frank-Jürgen, Farmington Hills, MI 48331 (US)
(86) Internationale Anmeldenummer: PCT/DE2001/001182
(87) Internationale Veröffentlichungsnummer: WO 2001/087673

(56) Entgegenhaltungen:
- WO-A-95/34085
- DE-A- 4 433 046
- DE-A- 19 537 383

## Beschreibung

### Stand der Technik

Die vorliegende Erfindung betrifft einen Intrusionssensor zur Erfassung einer Unfallschwere bei einem Fahrzeug.

Zur Erhöhung der Sicherheit in einem Fahrzeug werden heutzutage Rückhaltemittel wie z.B. Airbags eingesetzt, wobei mittels Beschleunigungssensoren ein Unfall erkannt wird und innerhalb von wenigen Millisekunden entschieden wird, ob und welche Rückhaltemittel gezündet werden sollen. Hierbei muß zwischen einem Seitenaufprall und einem Frontaufprall unterschieden werden. In beiden Fällen sind teilweise unterschiedliche Rückhaltemittel auszulösen, um die Fahrzeuginsassen zu schützen.

Ein derartiger Beschleunigungssensor ist beispielsweise aus der DE-32 31 800 bekannt. Hierbei wird eine federgefesselte, der zu messenden Beschleunigung ausgesetzte Trägemasse ausgelenkt und die Auslenkung in Bezug zu einem raumfesten Bezugspunkt erfasst. Bei Überschreiten einer Beschleunigungsschwelle wird ein Auslössignal erzeugt. Dabei weist ein massebehafteter Körper einen ersten Lichtleiter auf, dessen Ende von einer Lichtquelle beaufschlagt ist. Das andere Ende des Lichtleiters steht im Ruhezustand und im beschleunigungsabhängig ausgelenkten Zustand jeweils Lichtleitern gegenüber, die an Fotoelemente angeschlossen sind. Bei Auftreten einer Beschleunigung wird der erste Lichtleiter bewegt, so daß das von der Lichtquelle durch den ersten Lichtleiter geleitete Licht von einer anderen Fotozelle als im Ruhezustand aufgenommen wird. Dadurch kann die Beschleunigung ermittelt werden und entsprechend ein Rückhaltemittel gezündet werden.

Heutzutage sind Beschleunigungssensoren die einzige Informationsquelle für die Erkennung einer kritischen Situation, auf Grund derer der Auslösealgorhythmus eine Auslöseentscheidung der Rückhaltemittel berechnen muß. Mit einer zunehmenden Anzahl von Stufen bei der Zündung von Rückhaltemitteln (z.B. zweistufige Airbags) ist es notwendig, die unterschiedlichen Unfallschweren immer genauer voneinander zu unterscheiden, um so die verschiedenen Rückhaltemittel und deren verschiedenen Stufen für den Insassenschutz optimal zu zünden.

Insbesondere bei einem Seitenaufprall ist in den ersten Millisekunden nach dem Erstkontakt ein Rückhaltemittel zu zünden, um rechtzeitig eine Schutzwirkung für die Insassen zu entfalten. Die herkömmlichen Beschleunigungssensoren erfüllen jedoch diese Anforderungen nur in unzulänglicher Weise. Auch sind die Beschleunigungssensoren beispielsweise bei einem Frontalaufprall an der hinteren Fahrzeugseite überfordert. Bei einem Seitenaufprall unterscheiden die konventionellen Systeme bisher nur sehr grob in einen Aufprall vorn oder hinten. Unterscheidungen wie das Eindringen eines Hindernisses in eine Türe oder ein Aufprall eines Objektes auf die A-, B-, und/oder C-Säule des Fahrzeugs sind mit der bisherigen Beschleunigungssensorik nicht möglich.

Aus der WO 95/34085 ist eine Seitenaufprallsensoranordnung bekannt, bei der mehrere Lichtleiter verwendet werden, die voneinander beabstandet sind, wobei eine Lichtleiteranordnung näher zur Außenhaut und eine Lichtleiteranordnung näher zur Fahrgastzelte angeordnet ist.

### Vorteile der Erfindung

Der erfindungsgemäße Intrusionssensor zur Erfassung einer Unfallschwere bei einem Fahrzeug mit den Merkmalen des Hauptanspruchs hat demgegenüber den Vorteil, daß eine sehr genaue und schnelle Messung der Intrusionsgeschwindigkeit, d.h. der Geschwindigkeit, mit der ein Objekt auf das Fahrzeug aufprallt, bzw. das Fahrzeug auf ein Objekt prallt, möglich ist. Auch wird es durch die Anordnung einer ersten und zweiten Lichtleiteranordnung, welche zwischen sich einen Zwischenraum mit einer vorbestimmten Breite aufweisen möglich, erheblich schnellere Auslösezeiten als im Stand der Technik zu gewährleisten. Um eine genaue Ermittlung des Unfallbeginns und der Intrusionsgeschwindigkeit zu ermöglichen, ist die erste Lichtleiteranordnung zu einer Intrusionsseite hin gerichtet (d.h. einer Seite, von der ein Aufprall erwartet wird) und die zweite Lichtleiteranordnung zu einer Fahrzeuginnenseite hin gerichtet angeordnet. Mit anderen Worten sind die beiden Lichtleiteranordnungen im wesentlichen nebeneinander entlang einer Außenkontur eines Fahrzeugs angeordnet. Da als Meßmedium Licht verwendet wird, wird die Messung selbst gegen EMV-Einflüsse unanfällig.

Vorzugsweise besteht die erste Lichtleiteranordnung aus mehreren Lichtleiterschleifen, welche jeweils unterschiedliche Längen aufweisen. Hierdurch wird es insbesondere möglich, den Ort des Aufpralls genau zu bestimmen, da abhängig vom Aufprallort aufgrund der unterschiedlichen Längen der Lichtleiterschleifen nur einige der Lichtleiterschleifen verbogen bzw. beschädigt werden. Abhängig von den unterschiedlichen Längen bzw. der Anzahl der Lichtleiterschleifen kann dabei eine sehr genaue Bestimmung des Aufprallorts am Fahrzeug ermöglicht werden. Hierbei können die Lichtleiterschleifen horizontal oder vertikal nebeneinander angeordnet werden.

Vorteilhaft unterscheidet sich die Länge der Lichtleiterschleifen in Längsrichtung um den gleichen Betrag. Dies ermöglicht eine vorbestimmte Einteilung des Intrusionssensors in mehrere Segmente mit einer gleichen Segmentlänge. Hierdurch wird eine Ortsauflösung des Aufpralls in der Längsachse des Sensors mit der Mindestauflösung von einer Segmentlänge erreicht.

In einem bevorzugten Ausführungsbeispiel ist der Zwischenraum zwischen den beiden Lichtleiteranordnungen mit Schaumstoff gefüllt. Hierdurch ergibt sich insbesondere ein geringes Gewicht des erfingungsgemäßen Intrusionssensors.

Um eine möglichst geringe Anzahl von Bauteilen aufzuweisen, weisen die erste und die zweite Lichtleiteranordnung ein gemeinsames lichtemittierendes Element auf. Ebenfalls können die erste und zweite Lichtleiteranordnung vorzugsweise ein gemeinsames lichtaufnehmendes Element aufweisen. Dadurch läßt sich ein besonders kostengünstiger Intrusionssensor mit geringer Bauteilezahl herstellen.

Durch die Verwendung der ersten und zweiten Lichtleiteranordnungen sind das lichtemittierende Element und das lichtaufnehmende Element direkt optisch gekoppelt und es wird eine Selbstkalibrierung des Intrusionssensors ermöglicht. Beispielsweise kann die Selbstkalibrierung derart erfolgen, daß bei jedem Fahrzeugstart die als erstes durch das lichtaufnehmende Element aufgenommene Lichtmenge als neuer Referenzwert für den Intrusionssensor verwendet wird. Dadurch wird der erfindungsgemäße Intrusionssensor unanfällig gegen Alterungseffekte der Lichtleiteranordnungen.

Um auch bei einem leichten Aufprall einen Intrusionssensor mit einer hohen Sensibilität bereitzustellen, sind die Lichtleiter der Lichtleiteranordnung vorzugsweise ummantelt. Hierdurch wird insbesondere erreicht, daß ein schnelles Wellen bei einem Aufprall auf den Lichtleiter erreicht wird. Hierzu kann beispielsweise eine Kunststoffummantelung verwendet werden, welche an ihrer Innenseite, d.h. zum Lichtleiter hin, ein gezacktes Profil aufweist. Auch ist es möglich, daß ein Lichtleiter aus Glasfasern mit einer zusätzlichen Glasfaser mit einem geringeren Durchmesser umwickelt ist. Wenn nun eine derart umwickelte Glasfaser zwischen harten Gegenständen eingepreßt wird, bewirkt der Druck auf die Ummantelung eine Mäandrierung der dazwischen liegenden lichtführenden Glasfaser und Licht wird in die Umgebung ausgestreut.

Um einen kostengünstigen Intrusionssensor bereitzustellen, ist das lichtemittierende Element eine LED und das lichtaufnehmende Element eine Fotodiode.

Vorteilhaft ist der erfindungsgemäße Intrusionssensor im Türbereich eines Kraftfahrzeugs und/oder in der Stoßstange angeordnet. Es ist jedoch auch möglich, den erfindungsgemäßen Intrusionssensor an anderen Stellen des Kraftfahrzeugs z.B. im Dachbereich oder an den Kotflügeln anzuordnen.

### Zeichnung

Ein Ausführungsbeispiel der Erfindung ist in der Zeichnung dargestellt und wird in der nachfolgenden Beschreibung näher erläutert.
Figur 1 zeigt eine Schnittansicht eines Intrusionssensors gemäß einem Ausführungsbeispiel der vorliegenden Erfindung,
Figur 2 zeigt eine vergrößerte Schnittansicht des in Figur 1 dargestellten Lichtleiters,
Figur 3 zeigt eine vergrößerte Schnittansicht einer alternativen Ausgestaltung eines Lichtleiters,
Figur 4 zeigt eine vergrößerte Schnittansicht des erfindungsgemäßen Intrusionssensors,
Figur 5 zeigt eine teilweise Draufsicht auf ein Fahrzeug mit einem erfindungsgemäßen Intrusionssensor und
Figur 6 zeigt eine teilweise geschnittene Ansicht von hinten des in Figur 5 dargestellten Fahrzeugs.

### Beschreibung des Ausführungsbeispiels

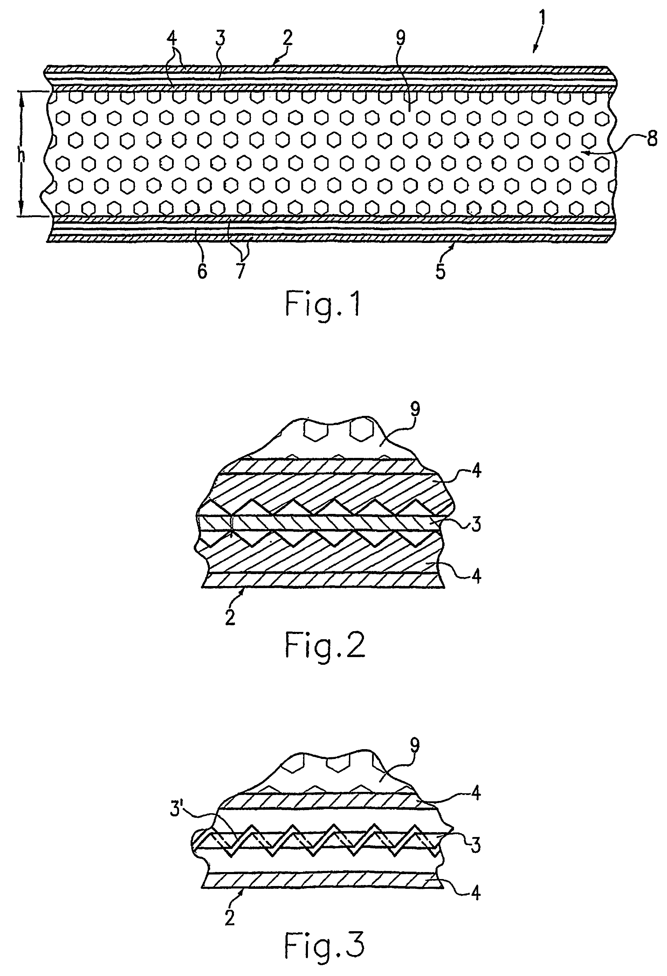

In den Figuren 1 bis 6 ist ein Ausführungsbeispiel eines Intrusionssensors gemäß der vorliegenden Erfindung dargestellt.

Figur 1 zeigt eine vereinfachte schematische Schnittansicht eines Intrusionssensors 1. Der Intrusionssensor 1 umfaßt eine erste Lichtleiteranordnung 2 und eine zweite Lichtleiteranordnung 5. Die erste Lichtleiteranordnung 2 besteht im wesentlichen aus einem Glasfaserkabel 3, welches eine Ummantelung 4 aus einem harten Kunststoff aufweist. Weiter umfaßt die erste Lichtleiteranordnung 2 ein lichtemittierendes Element sowie ein lichtaufnehmendes Element (beide nicht dargestellt). Die zweite Lichtleiteranordnung 5 besteht im wesentlichen aus einem Glasfaserkabel 6, welches eine Ummantelung 7 aus einem harten Kunststoff aufweist. Weiter umfaßt die zweite Lichtleiteranordnung 5 ebenfalls ein nicht dargestelltes lichtemittierendes Element sowie ein lichtaufnehmendes Element.

Zwischen der ersten Lichtleiteranordnung 2 und der zweiten Lichtleiteranordnung 5 ist ein Zwischenraum 8 mit einer Breite h angeordnet. Der Zwischenraum 8 ist mit einem Schaumstoff 9 gefüllt. Somit sind die erste Lichtleiteranordnung 2 und die zweite Lichtleiteranordnung 5 in einer Ebene angeordnet, welche im wesentlichen parallel zu einer erwarteten Aufprallrichtung angeordnet ist.

Figur 2 zeigt einen vergrößerten Ausschnitt der ersten Lichtleiteranordnung 2. Wie in Figur 2 gezeigt, weist die Ummantelung 4 eine gezackte Innenseite auf, deren Spitzen sich direkt mit dem Glasfaserkabel 3 in Kontakt befindet. Durch das Vorhersehen des gezackten Innenprofils der Ummantelung 4 wird sichergestellt, daß das Glasfaserkabel 3 bei einem Zusammendrücken der Umhüllung 4 sofort wellig wird und das Licht in der lichtführenden Glasfaser 3 in die Umgebung ausgestreut wird. Dadurch wird ein schnelles und genaues Erkennen des Zusammendrückens und damit eines Aufpralls möglich.

In Figur 3 ist eine alternative Ausgestaltung der Lichtleiteranordnung 2 dargestellt. Dabei ist die lichtführende Glasfaser 3 mit einer zusätzlichen Glasfaser 3' umwickelt, welche einen deutlich geringeren Durchmesser als die lichtführende Glasfaser 3 aufweist. Der Durchmesser der Glasfaser 3' liegt beispielsweise zwischen der Hälfte und einem Drittel des Durchmessers der lichtführenden Glasfaser 3. Die beiden Glasfasern 3 und 3' sind ihrerseits wiederum von einer Umhüllung 4 beispielsweise aus Kunststoff umgeben. Wenn nun ein Zusammendrücken der Umhüllung 4 auftritt, ergibt sich die gleiche Wirkung wie bei der in Figur 2 dargestellten Lichtleiteranordnung. Somit ist auch mit einer in Figur 3 gezeigten Lichtleiteranordnung ein schnelles und genaues Erfassen eines Aufpralls möglich. Selbstverständlich kann auch die zweite Lichtleiteranordnung 5 wie in den Figuren 2 und 3 gezeigt ausgeführt sein.

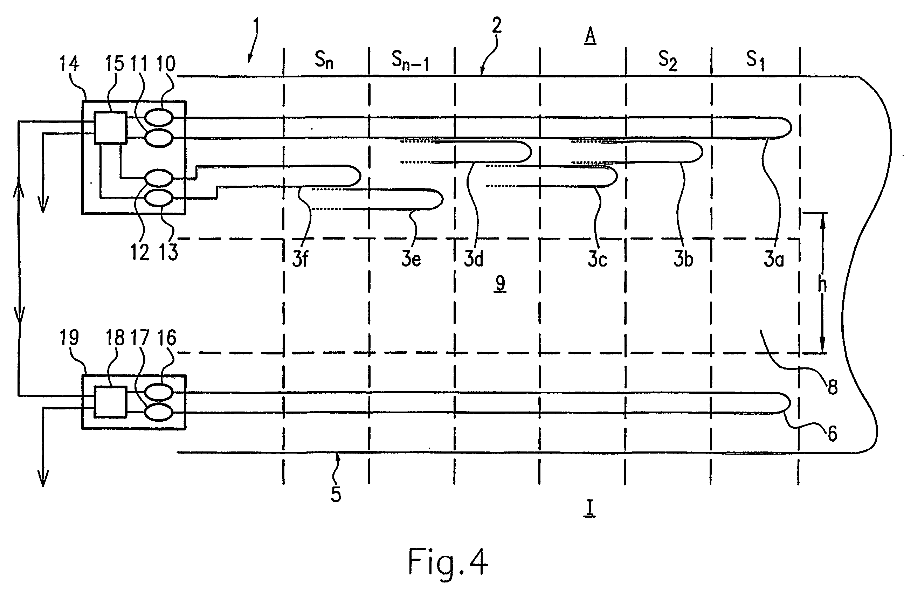

In Figur 4 ist nun der Aufbau eines erfindungsgemäßen Intrusionssensors gemäß einem Ausführungsbeispiel der Erfindung genauer dargestellt. Die erste Lichtleiteranordnung 2 umfaßt mehrere Lichtleiter 3a bis 3f, welche in Schleifen gelegt sind. Hierbei wird Licht von LEDs in die Lichtleiter 3a bis 3f eingespeist. Nachdem das Licht den Lichtleiter durchschritten hat, nehmen Fotodioden die verbleibende Lichtintensität auf.

In Figur 4 ist dieser Aufbau nur für die beiden Lichtleiter 3a und 3f genauer dargestellt. Eine LED 10 speist Licht in den Lichtleiter 3a ein und eine Fotodiode 11 nimmt nach dem Durchschreiten des Lichts durch den Lichtleiter 3a die Lichtintensität auf. Beim Lichtleiter 3f wird Licht durch eine LED 12 in den Lichtleiter 3f eingespeist und durch eine Fotodiode 13 aufgenommen. In gleicher Weise sind für die anderen Lichtleiterschleifen 3b bis 3e LEDs beziehungsweise Fotodioden vorgesehen, welche jedoch aus Gründen einer übersichtlicheren Darstellbarkeit nicht mehr in Figur 4 eingezeichnet worden sind. Die LEDs 10, 12 und die Fotodioden 11, 13 sind mit einer Auswerteinheit 15 verbunden, welche in einem Steuergerät 14 angeordnet ist.

Wie in Figur 4 gezeigt, ist der Intrusionssensor 1 in eine Vielzahl von Segmenten S₁ bis Sₙ unterteilt, wobei jeweils eine der Lichtleiterschleifen 3a bis 3f sich bis zu einem entsprechenden Segment erstreckt. Die Segmente S₁ bis Sₙ weisen voneinander die gleichen Abstände auf und daher unterscheiden sich die Längen der Lichtleiterschleifen 3a bis 3f jeweils um die Länge eines Segmentes. Mit anderen Worten wird durch jedes Segment eine Endschleife der Lichtleiterschleifen geführt.

Wie in Figur 4 gezeigt, besteht die zweite Lichtleiteranordnung 5 nur aus einer Lichtleiterschleife 6 sowie einer LED 16 und einer Fotodiode 17. Die LED 16 und die Fotodiode 17 sind mit einer Auswerteinheit 18 verbunden und sind jeweils in einem Steuergerät 19 angeordnet. Die Auswerteinheit 18 ist mit der Auswerteinheit 15 für die erste Lichtleiteranordnung 2 verbunden und die beiden Auswerteinheiten 15 und 18 sind jeweils mit einer Zentraleinheit (nicht dargestellt) verbunden. Zwischen der ersten Lichtleiteranordnung 2 und der zweiten Lichtleiteranordnung 5 ist ein Zwischenraum 8 angeordnet, welcher mit Schaumstoff 9 gefüllt ist.

Nachfolgend wird die Betriebsweise des Intrusionssensors beschrieben. Der Intrusionssensor 1 zur Erfassung einer Unfallschwere bei einem Fahrzeug ist derart angeordnet, daß die erste Lichtleiteranordnung 2 an einer Aussenseite A des Fahrzeugs angeordnet ist und die zweite Lichtleiteranordnung 5 zur Innenseite I des Fahrzeugs ausgerichtet ist. Hierbei bilden die erste Lichtleiteranordnung 2 und die zweite Lichtleiteranordnung 5 zusammen mit dem Zwischenraum 8 eine Ebene, welche in Richtung des zu erwartenden Aufpralls ausgerichtet ist. Wenn nun ein Unfall auftritt und ein Objekt beispielsweise im Segment Sₙ₋₁ in den Intrusionssensor 1 eintritt, werden durch das Eintreten des Objekts die Lichtleiterschlaufen 3a bis 3e zusammengedrückt. Dadurch ändert sich die von den zu den jeweiligen Lichtleitern zugeordneten Fotodioden aufgenommene Lichtintensität, so daß die Auswerteeinheit 15 genau bestimmen kann, welche Lichtleiterschleifen verbogen (micro-bending) bzw. beschädigt worden sind. Im vorliegenden Beispiel bleibt die im Segment Sₙ angeordnete Lichtleiterschlaufe 3f unbeschädigt bzw. nicht verbogen, so daß sich hier die Lichtintensität nicht ändert. Somit kann der erfindungsgemäße Intrusionssensor sofort bestimmen, daß eine Intrusion auftritt. Weiterhin kann sofort bestimmt werden, an welchem Ort des Intrusionssensors die Intrusion auftritt. Wenn nun beim Fortschreiten des Unfalls das Objekt tiefer in das Fahrzeug eindringt und somit auch tiefer in den Sensor eindringt, dringt das Objekt durch den mit Schaumstoff gefüllten Zwischenraum 8 und trifft auf die zweite Lichtleiteranordnung 5.

Wie in Figur 4 gezeigt, ist bei der Lichtleiteranordnung 5 nur eine Lichtleiterschleife 6 vorgesehen. Entsprechend wie bei der ersten Lichtleiteranordnung 2 dringt das Objekt in die zweite Lichtleiteranordnung 5 ein und somit verändert sich die Lichtintensität an der Fotodiode 17. Somit kann analog zur ersten Lichtleiteranordnung 2 die Tatsache und der Zeitpunkt des Auftreffens des Objekts auf die zweite Lichtleiteranordnung 5 ermittelt werden. Aus der Zeit zwischen dem Aufprall des Objekts auf die erste Lichtleiteranordnung 2 und dem Aufprall des Objekts auf die zweite Lichtleiteranordnung 5 kann zusammen mit der Breite h des Zwischenraums 8 die Intrusionsgeschwindigkeit in einem bestimmten Segment des Sektors berechnet werden. Hierdurch kann zuverlässig der Ort und die Stärke des Unfalls bestimmt werden und dementsprechend Rückhaltemittel zum Schutz der Fahrzeuginsassen gezündet werden.

Wenn an Stelle der in Figur 4 gezeigten einzigen Lichtleiterschleife 6 bei der zweiten Lichtleiteranordnung 5 entsprechend der ersten Lichtleiteranordnung 2 mehrere Lichtleiterschleifen unterschiedlicher Länge verwendet werden, kann zusätzlich noch die Richtung des Objekts bestimmt werden, in welcher dieses in das Fahrzeug eindringt. Die Genauigkeit der Richtungsauflösung hängt von der Anzahl der Segmente ab. Bei einer großen Anzahl wird eine gute Auflösung erreicht, während bei einer kleinen Anzahl nur eine eingeschränkte Möglichkeit der Richtungsauflösung gegeben ist.

Um eine möglichst geringe Anzahl von Bauteilen aufzuweisen, können die Steuergeräte 14 und 19 sowie die Auswerteinheiten 15 und 18 zu einem Steuergerät beziehungsweise einer Auswerteinheit zusammengefaßt werden. Auch ist es möglich, daß an Stelle der Vielzahl von LEDs und Fotodioden jeweils nur eine LED beziehungsweise eine Fotodiode je Lichtleiteranordnung verwendet wird.

Somit ist es erfindungsgemäß möglich, die Rückhaltemittel des Fahrzeugs entsprechend der Intensität des Aufpralls beziehungsweise des Ortes des Aufpralls zu zünden. Da sowohl der Unfallbeginn als auch die Intrusionsgeschwindigkeit schnell und genau gemessen werden können, ermöglicht der erfindungsgemäße Intrusionssensor erheblich schnellere Auslösezeiten als bisher möglich waren. Somit kann durch die Zentraleinheit eine optimale Ansteuerung der Rückhaltesysteme des Fahrzeugs abhängig von Ort und Geschwindigkeit des Aufpralls ermöglicht werden.

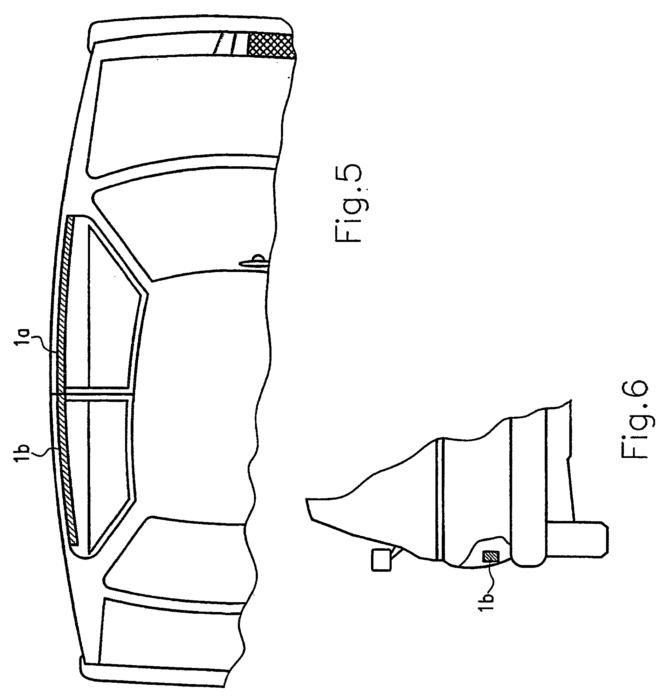

In den Figuren 5 und 6 ist beispielhaft die Anordnung des erfindungsgemäßen Intrusionssenors in einem Kraftfahrzeug dargestellt. Wie in Figur 5 gezeigt, kann der Intrusionssensor 1a, 1b in den Türbereichen des Fahrzeugs angeordnet werden, da primär die Insassen innerhalb der Fahrgastzelle zu schützen sind. Hierbei ist jeweils ein Instrusionssensor 1a für die vordere Tür und ein Intrusionssensor 1b für die hintere Tür vorgesehen. Wie in Figur 6 gezeigt, wird der Intrusionssensor vorzugsweise in dem Bereich der Tür angeordnet, welche am weitesten nach außen steht, da bei einem Unfall mit hoher Wahrscheinlichkeit an diesem Punkt der erste Aufprallkontakt vorhanden ist.

Zusammenfassend wurde insoweit ein Intrusionssensor zur Erfassung einer Unfallschwere bei einem Fahrzeug beschrieben, welcher eine erste Lichtleiteranordnung 2 und eine zweite Lichtleiteranordnung 5 aufweist. Zwischen den beiden Lichtleiteranordnungen 2, 5 ist ein Zwischenraum 8 mit einer Breite h angeordnet. Hierbei ist die erste Lichtleiteranordnung 2 in Richtung einer Intrusionsseite angeordnet. Die zweite Lichtleiteranordnung 5 ist in Richtung der Fahrzeuginnenseite angeordnet.

Die vorhergehende Beschreibung des Ausführungsbeispiels gemäß der vorliegenden Erfindung dient nur zu illustrativen Zwecken und nicht zum Zwecke der Beschränkung der Erfindung.

## Patentansprüche

1. Intrusionssensor zur Erfassung einer Unfallschwere bei einem Fahrzeug mit
- einer ersten Lichtleiteranordnung (2) und
- einer zweiten Lichtleiteranordnung (5)
- welche zwischen sich einen Zwischenraum (8) mit einer Breite (h) aufweisen,
- wobei die erste Lichtleiteranordnung (2) an einer Intrusionsseite und die zweite Lichtleiteranordnung (5) an einer Fahrzeuginnenseite angeordnet ist, **dadurch gekennzeichnet, dass** die erste und die zweite Lichtleiteranordnung (2, 5) selbstkalibrierend ausgebildet sind.

2. Intrusionssensor nach Anspruch 1, **dadurch gekennzeichnet, daß** die erste Lichtleiteranordnung (2) aus mehreren Lichtleiterschleifen (3a-3f) besteht, welche jeweils unterschiedliche Längen aufweisen.

3. Intrusionssensor nach Anspruch 2, **dadurch gekennzeichnet, daß** sich die Länge der Lichtleiterschleifen (3a-3f) in Längsrichtung jeweils um den gleichen Betrag unterscheiden.

4. Intrusionssensor nach einem der Ansprüche 1 bis 3, **dadurch gekennzeichnet, daß** der Zwischenraum (8) mit Schaumstoff (9) gefüllt ist.

5. Intrusionssensor nach einem der Ansprüche 1 bis 4, **dadurch gekennzeichnet, daß** die erste und die zweite Lichtleiteranordnung (2, 5) ein gemeinsames lichtemittierendes Element aufweisen.

6. Intrusionssensor nach einem der Ansprüche 1 bis 5, **dadurch gekennzeichnet, daß** die erste und die zweite Lichtleiteranordnung (2, 5) ein gemeinsames lichtaufnehmendes Element aufweisen.

7. Intrusionssensor nach einem der Ansprüche 1 bis 6, **dadurch gekennzeichnet, daß** die Lichtleiter (3) eine Ummantelung (4) aufweisen.

8. Intrusionssensor nach einem der Ansprüche 1 bis 7, **dadurch gekennzeichnet, daß** das lichtemittierende Element ein LED und das lichtaufnehmende Element eine Diode ist

9. Intrusionssensor nach einem der Ansprüche 1 bis 8 **dadurch gekennzeichnet, daß** die erste Lichtleiteranordnung (2) und die zweite Lichtleiteranordnung (5) eine gemeinsame Auswerteinheit aufweisen.

## Claims

1. Incursion sensor for detecting the severity of a vehicle accident, having
- a first optical conductor arrangement (2) and
- a second optical conductor arrangement (5),
- which have between them an interspace (8) of width (h),
- the first optical conductor arrangement (2) being arranged on an incursion side, and the second optical conductor arrangement (5) being arranged on a vehicle inner side, **characterized in that** the first and the second optical conductor arrangement (2, 5) are of self-calibrating design.

2. Incursion sensor according to Claim 1, **characterized in that** the first optical conductor arrangement (2) comprises a plurality of optical conductor loops (3a-3f) which are of different length in each case.

3. Incursion sensor according to Claim 2, **characterized in that** the length of the optical conductor loops (3a-3f) differ by the same amount in the longitudinal direction in each case.

4. Incursion sensor according to one of Claims 1 to 3, **characterized in that** the interspace (8) is filled with foam plastic (9).

5. Incursion sensor according to one of Claims 1 to 4, **characterized in that** the first and the second optical conductor arrangement (2, 5) have a common light-emitting element.

6. Incursion sensor according to one of Claims 1 to 5, **characterized in that** the first and the second optical conductor arrangement (2, 5) have a common light-receiving element.

7. Incursion sensor according to one of Claims 1 to 6, **characterized in that** the optical conductors (3) have a cladding (4).

8. Incursion sensor according to one of Claims 1 to 7, **characterized in that** the light-emitting element is an LED, and the light-receiving element is a diode.

9. Incursion sensor according to one of Claims 1 to 8, **characterized in that** the first optical conductor arrangement (2) and the second optical conductor arrangement (5) have a common evaluation unit.

## Revendications

1. Détecteur d'intrusion destiné à détecter la gravité d'un accident pour un véhicule, comportant
- un premier arrangement de guides optiques (2) et
- un deuxième arrangement de guides optiques (5)
- qui ont entre eux un espace intermédiaire (8) de largeur (h),
- le premier arrangement de guides optiques (2) étant disposé sur un côté d'intrusion et le deuxième arrangement de guides optiques (5) sur un côté intérieur du véhicule,
**caractérisé en ce que**
le premier et le deuxième arrangement de guides optiques (2, 5) sont conçus pour s'autocalibrer.

2. Détecteur d'intrusion selon la revendication 1,
**caractérisé en ce que**
le premier arrangement de guides optiques (2) comprend plusieurs boucles de guide optique (3a à 3f) qui chacune présentent des longueurs différentes.

3. Détecteur d'intrusion selon la revendication 2,
**caractérisé en ce que**
les longueurs des boucles de guide optique (3a à 3f) en direction longitudinale diffèrent chacune de la même valeur.

4. Détecteur d'intrusion selon l'une des revendications 1 à 3,
**caractérisé en ce que**
l'espace intermédiaire (8) est rempli de mousse synthétique (9).

5. Détecteur d'intrusion selon l'une des revendications 1 à 4,
**caractérisé en ce que**
le premier et le deuxième arrangement de guides optiques (2, 5) présentent un élément commun émetteur de lumière.

6. Détecteur d'intrusion selon l'une des revendications 1 à 3,
**caractérisé en ce que**
le premier et le deuxième arrangement de guides optiques (2, 5) présentent un élément commun récepteur de lumière.

7. Détecteur d'intrusion selon l'une des revendications 1 à 6,
**caractérisé en ce que**
les guides optiques (3) présentent une enveloppe (4).

8. Détecteur d'intrusion selon l'une des revendications 1 à 7,
**caractérisé en ce que**
l'élément émetteur de lumière est une DEL et l'élément récepteur de lumière est une diode.

9. Détecteur d'intrusion selon l'une des revendications 1 à 8,
**caractérisé en ce que**
le premier arrangement de guides optiques (2) et le deuxième arrangement de guides optiques (5) présentent une unité d'exploitation commune.
